(19) Europäisches Patentamt / European Patent Office / Office européen des brevets

(11) **EP 2 832 414 B1**

(12) **EUROPEAN PATENT SPECIFICATION**

(45) Date of publication and mention
of the grant of the patent:
**26.06.2019 Bulletin 2019/26**

(21) Application number: **12873173.4**

(22) Date of filing: **30.03.2012**

(51) Int Cl.:
**B01D 46/00** *(2006.01)*    **C04B 41/85** *(2006.01)*
**C04B 41/00** *(2006.01)*    **C04B 41/50** *(2006.01)*
**F01N 3/022** *(2006.01)*    **B01D 46/24** *(2006.01)*
**C04B 35/565** *(2006.01)*    **C04B 37/00** *(2006.01)*
*C04B 111/00* *(2006.01)*

(86) International application number:
**PCT/JP2012/058746**

(87) International publication number:
**WO 2013/145318 (03.10.2013 Gazette 2013/40)**

(54) **PRODUCTION METHOD FOR HONEYCOMB FILTER**

HERSTELLUNGSVERFAHREN FÜR EINEN WABENFILTER

PROCÉDÉ DE PRODUCTION D'UN FILTRE EN NID D'ABEILLES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.02.2015 Bulletin 2015/06**

(73) Proprietor: **Ibiden Co., Ltd.
Ogaki-shi
Gifu 503-8604 (JP)**

(72) Inventors:
• **JINBO, Naoyuki
Ibi-gun
Gifu 501-0695 (JP)**
• **KASUGA, Takafumi
Ibi-gun
Gifu 501-0695 (JP)**
• **MAKINO, Misako
Ibi-gun
Gifu 501-0695 (JP)**
• **MD, Saiduzzaman
Ibi-gun
Gifu 501-0695 (JP)**
• **NAKAMURA, Kazuki
Ibi-gun
Gifu 501-0695 (JP)**

(74) Representative: **Marschall, Stefan et al
Elbpatent
Marschall & Partner
Patent- und Rechtsanwaltskanzlei mbB
Bavariaring 26
80336 München (DE)**

(56) References cited:
EP-A1- 0 470 340          EP-A1- 1 302 231
WO-A1-2012/030533    JP-A- H11 123 308
JP-A- 2000 202 220       JP-A- 2007 144 371
JP-A- 2008 284 538       JP-A- 2008 284 538
JP-A- 2009 085 010       JP-A- 2009 085 010
JP-A- 2011 084 448       US-A- 5 762 841

**Description**

TECHNICAL FIELD

The present invention relates to a production method for a honeycomb filter.

BACKGROUND ART

Particulate matter (hereinafter, also referred to as "PM") such as soot is contained in exhaust gases discharged from internal combustion engines such as diesel engines, and has raised problems as contaminants harmful to the surrounding environment and the human body.

Also, people have been worried about influence of toxic gas components such as CO, HC, and NOx contained in exhaust gases on the environment and the human body as well.

For the above reasons, exhaust gas purifying apparatuses for collecting PM or converting toxic gas component in exhaust gases have been used.

Honeycomb filters made of ceramics or the like are used for manufacturing the exhaust gas purifying apparatuses. When exhaust gases are passed through the honeycomb filter, those gases can be purified.

A honeycomb filter for collecting PM in exhaust gases in an exhaust gas purifying apparatus has a large number of cells each sealed at either end thereof and placed longitudinally in parallel with one another with a cell wall interposed therebetween. Therefore, exhaust gases flowing into one of the cells surely pass through the cell wall separating the cells and then flow out from other cells. Therefore, when a honeycomb filter of this kind is installed in an exhaust gas purifying apparatus, PM contained in exhaust gases are collected on the cell walls upon passing through the honeycomb filter. The cell walls of the honeycomb filter function as filters through which the exhaust gases are purified.

In an initial stage of collecting PM in the honeycomb filter, PM enters into a pore of the cell wall, and is collected in the cell wall to clog the pore of the cell wall, so that a so-called "depth filtration" state is generated. In the depth filtration state, PM is deposited in (the pore of) the cell wall. For this reason, immediately after start of PM collecting, there is a problem that the substantial porosity of the cell wall decreases, and a pressure loss rapidly increases.

Patent literature 1 discloses a honeycomb filter in which an auxiliary filter layer having a smaller pore diameter than the cell wall is formed on the surface of the cell wall constituting a honeycomb structure used as the honeycomb filter to suppress a rapid pressure increase caused by depth filtration of PM.

EP 1 302 231 A1 discloses a multilayered honeycomb filter for collecting dust comprising a support having a honeycomb structure and one or two or more filter layers on the surface of the support. The filter layer is composed of ceramic particles having an average particle diameter different from that of ceramic particles constituting the support. The average particle diameter of the filter layer in contact with the support is not smaller than 3/5 times and not larger than 1 times an average pore diameter of the support. And an average thickness of the filter layer in contact with the support is not larger than 7 times the average particle diameter of the filter layer.

EP 0 470 340 A1 discloses porous substrates or supports fabricated from titania powder(s) having mean particle size of at least 7 $\mu$m. The titania substrates are useful for supporting porous membranes for separation and filtration processes. The titania powders provide supports with mean pore sizes in the approximate range of 3 to 15 $\mu$m, a sharp or narrow pore size distribution, total Hg porosities of at least about 30%, and MOR strengths of 50 up to 280 or more kg/cm$^2$.

JP 2009 085010 A discloses an exhaust gas control device for controlling exhaust gas discharged from an internal combustion engine, said exhaust gas control device being provided with a gas flow passage in which the exhaust gas flows, and a particulate filter provided in the gas passage, in which many fine holes are formed. A substantially whole introduction face of the particulate filter contacting the exhaust gas is coated by a microporous body wherein micropores having hole diameters shorter than that of a fine hole are formed.

WO 2012/030533 A1 discloses that a porous discriminating layer is formed on a ceramic support having at least one porous wall by (a) establishing a flow of a gas stream containing agglomerates of particles and (b) calcining said deposited layer to form the discriminating layer. At least a portion of the particles are of a sinter-resistant material or a sinter-resistant material precursor. The particles have a size from 0.01 to 5 $\mu$m and the agglomerates have a size of from 10 to 200 $\mu$m.

CITATION LIST

- Patent Literature

Patent Literature 1: International Publication WO 2008/136232

SUMMARY OF INVENTION

- Technical Problem

In the conventional honeycomb filter described in Patent literature 1, when the diameter of particle constituting the auxiliary filter layer is large, the distance between particles is large, resulting in that the number of PM passing through the auxiliary filter layer increases, failing to achieve a high collecting efficiency.
Further depth filtration of PM passing through the auxiliary filter layer increases the pressure loss.
In the conventional honeycomb filter described in Patent literature 1, when the diameter of particle constituting the auxiliary filter layer is small, the particle constituting the auxiliary filter layer enters into a pore of the cell wall to clog the pore, increasing the pressure loss.
To solve the above-mentioned problems, an object of the present invention is to provide a production method for a honeycomb filter capable of suppressing an increase in the pressure loss as well as maintaining a high PM collecting efficiency.

- Solution to Problem

Claim 1 provides a production method for a honeycomb filter (100)comprising:

a ceramic honeycomb substrate (103) including a porous honeycomb fired body (110) having a large number of cells (111a, 111b) placed longitudinally in parallel with one another with a cell wall (113) interposed therebetween, each of the cells passing fluid therethrough and being sealed at either a fluid inlet end or a fluid outlet end of the cell; and an auxiliary filter layer (115) including at least two layers made of a heat-resistant oxide, the auxiliary filter layer (115) being formed on a surface of the cell wall (113) of the cell opened at the fluid inlet end and sealed at the fluid outlet end, and on a pore portion in said cell wall (113), wherein
said auxiliary filter layer (115) includes a first layer (115a) in which particles having a first average particle diameter are deposited on the surface of said cell wall (113), and a second layer (115b) in which particles having a smaller second average particle diameter than said first average particle diameter are deposited on a surface of said first layer (115a), said method comprising the following sequence of steps:

a honeycomb fired body production step of producing a porous honeycomb fired body (110) by using a ceramic powder, the porous honeycomb fired body (110) having a large number of cells (111a, 111b) placed longitudinally in parallel with one another with a cell wall (113) interposed therebetween, each of the cells being sealed at either a fluid inlet end or a fluid outlet end of the cell; and
an auxiliary filter layer (115) formation step of forming an auxiliary filter layer (115) including at least two layers, on a surface of said cell wall (113), wherein

said auxiliary filter layer (115) formation step includes:

a first droplet dispersion step of dispersing first droplets containing a raw material for first ceramic particles in first carrier gas; a first drying step of drying said first carrier gas at 100 to 800°C,
a first introducing step of introducing said dried first carrier gas into the cell opened at the fluid inlet end and sealed at the fluid outlet end;
a second droplet dispersion step of dispersing second droplets containing a raw material for second ceramic particles and having a smaller average droplet diameter than said first droplet, in second carrier gas;
a second drying step of drying said second carrier gas at 100 to 800°C, and
a second introducing step of introducing said dried second carrier gas into the cell opened at the fluid inlet end and sealed at the fluid outlet end, after introducing said first carrier gas,
wherein said first droplets include a heat-resistant oxide precursor as said raw material, the heat-resistant oxide precursor becoming a heat-resistant oxide by heating, and

in said first drying step, said first ceramic particles in a spherical shape are formed from said first droplets, wherein said second droplets include a heat-resistant oxide precursor as said raw material, the heat-resistant oxide precursor becoming a heat-resistant oxide by heating, and
in said second drying step, said second ceramic particles in a spherical shape are formed from said second droplets, wherein in said first introducing step, said first ceramic particles are deposited on the surface of said cell wall to form said first layer (115a), and in said second introducing step, said second ceramic particles are deposited on the surface of said first layer (115a) to form said second layer (115b).

In the production method for the honeycomb filter according to claim 1, the auxiliary filter layer including at least two layers is formed on the surface of the cell wall and on the pore portion in the cell wall.

The first layer of the auxiliary filter layer is formed by depositing particles having a relatively large diameter on the surface of the cell wall. This can prevent the particles constituting the auxiliary filter layer from entering into pores of the cell wall to clog the pores. This can suppress an increase in the pressure loss.

In the production method for the honeycomb filter according to claim 1, the second layer of the auxiliary filter layer is formed by depositing particles having a relatively small diameter on the surface of the first layer of the auxiliary filter layer. The second layer has a smaller pore diameter and thus, can collect PM that can be hardly collected by the first layer having a larger pore diameter. As a result, the second layer of the auxiliary filter layer can prevent PM from passing through the auxiliary filter layer. Therefore, a high PM collecting efficiency can be maintained.

The second layer of the auxiliary filter layer can prevent depth filtration of PM in the auxiliary filter layer. As a result, an increase in the pressure loss can be suppressed.

As described above, in the production method for the honeycomb filter according to claim 1, by making the diameter of particles constituting the auxiliary filter layer smaller as the particles are further from the surface of the cell wall, it is possible to suppress an increase in the pressure loss and maintain a high PM collecting efficiency.

Preferably the first average particle diameter is from 1.2 to 2.5 $\mu$m.

When the first average particle diameter is less than 1.2 $\mu$m, the particles constituting the first layer enter into pores of the cell walls to easily clog the pores, so that the pressure loss tends to increase.

On the other hand, when the first average particle diameter exceeds 2.5 $\mu$m, the particles constituting the second layer enter into pores formed between the particles of the first layer, so that the pressure loss tends to increase.

Preferably the second average particle diameter is from 0.2 to 1.2 $\mu$m.

When the second average particle diameter is less than 0.2 $\mu$m, the particles constituting the second layer enter into pores formed between the particles of the first layer to easily clog the pores, so that the pressure loss tends to increase.

On the other hand, when the second average particle diameter exceeds 1.2 $\mu$m, PM easily passes through the auxiliary filter layer, so that a sufficient collecting efficiency is hardly obtained. Further, depth filtration of PM in the second layer tends to occur so that the pressure loss tends to increase.

Preferably a ratio of the first average particle diameter to the second average particle diameter, namely, (first average particle diameter) : (second average particle diameter) is from 10:1 to 1.5:1.

When the ratio of the first average particle diameter to the second average particle diameter is in the above numerical range, depth filtration of the particles constituting the second layer in the first layer can be prevented, so that it is possible to effectively suppress an increase in pressure loss and to maintain a high PM collecting efficiency.

Preferably a thickness of the first layer is from 5 to 20 $\mu$m.

Preferably a thickness of the second layer is from 5 to 50 $\mu$m.

Preferably a thickness of the auxiliary filter layer is from 10 to 70 $\mu$m.

When the thickness of the auxiliary filter layer is less than 10 $\mu$m, the PM collecting efficiency tends to decrease, and depth filtration of PM in the auxiliary filter layer tends to occur, so that the pressure loss of the honeycomb filter tends to increase.

On the other hand, when the thickness of the auxiliary filter layer exceeds 70 $\mu$m, the auxiliary filter layer becomes too thick so that the pressure loss tends to increase.

The thickness of the auxiliary filter layer refers to a thickness of the entire auxiliary filter layer including the first layer and the second layer.

In the production method for the honeycomb filter according to claim 1, the two layers constituting the auxiliary filter layer are made of a heat-resistant oxide.

Preferably the heat-resistant oxide is at least one selected from the group consisting of alumina, silica, mullite, ceria, zirconia, cordierite, zeolite, and titania.

If the auxiliary filter layer is made of the heat-resistant oxide, failures such as melting of the auxiliary filter layer in the regeneration process of burning PM are not caused. Thus, a honeycomb filter having excellent heat resistance can be produced.

Preferably at least one layer constituting the auxiliary filter layer includes hollow particles.

When the auxiliary filter layer is formed of the hollow particles, even if the auxiliary filter layer is thick, the thermal capacity of the auxiliary filter layer can be made small.

Preferably the auxiliary filter layer includes k (k is a natural number) layers stacked on the surface of the second layer, and an average particle diameter of particles deposited in an (n+2)th layer (n is a natural number of 1 or more and k or less) from the surface of the cell wall is smaller than an average particle diameter of particles deposited in an (n+1)th layer from the surface of the cell wall.

Also preferably the diameter of the particles constituting the auxiliary filter layer becomes smaller as the particles are further from the surface of the cell wall. Therefore, an increase in the pressure loss can be effectively suppressed, and a high PM collecting efficiency can be maintained.

In the production method for the honeycomb filter according to claim 1, a honeycomb filter can be preferably produced.

Therefore, a honeycomb filter capable of suppressing an increase in the pressure loss and maintaining a high PM collecting efficiency can be produced.

In the production method for the honeycomb filter according to claim 2, the first droplets are dispersed in the first carrier gas by spraying in the first droplet dispersion step, the second droplets are dispersed in the second carrier gas by spraying in the second droplet dispersion step, a spraying pressure in the second droplet dispersion step is higher than a spraying pressure in the first droplet dispersion step.

Spherical droplets can be provided by dispersing droplets in the carrier gas by spraying. The ceramic particles obtained from spherical droplets become spherical and thus, spherical ceramic particles can be deposited on the surface of the cell wall.

As the spraying pressure is higher, smaller droplets can be provided. Accordingly, by making the spraying pressure in the second droplet dispersion step higher than the spraying pressure in the first droplet dispersion step, the size of ceramic particles deposited to form the second layer of the auxiliary filter layer can be made smaller than the size of ceramic particles deposited to form the first layer of the auxiliary filter layer.

The production method for the honeycomb filter according to claim 1 further includes a first drying step of drying the first carrier gas at 100 to 800°C, and in the first introducing step, the dried first carrier gas is introduced to the cell.

The production method for the honeycomb filter according to claim 1 further includes a second drying step of drying the second carrier gas at 100 to 800°C, and in the second introducing step, the dried second carrier gas is introduced into the cell.

By heating the carrier gas, for example, as described above, the auxiliary filter layer made of the particles of the heat-resistant oxide can be formed.

The production method for the honeycomb filter according to claim 3 further includes at least either a first heating step of heating, to 900 to 1500°C, the ceramic honeycomb substrate into which the first carrier gas is introduced or a second heating step of heating, to 900 to 1500°C, the ceramic honeycomb substrate into which the second carrier gas is introduced.

By heating the ceramic honeycomb substrate into which the carrier gas is introduced, for example, as described above, the auxiliary filter layer made of the particles of the heat-resistant oxide can be formed.

In the production method for the honeycomb filter according to claim 1, the first droplets include a heat-resistant oxide precursor as the raw material, the heat-resistant oxide precursor becoming a heat-resistant oxide by heating, and in the first drying step, the first ceramic particles in a spherical shape are formed from the first droplets.

In the production method for the honeycomb filter according to claim 1, the second droplets include a heat-resistant oxide precursor as the raw material, the heat-resistant oxide precursor becoming a heat-resistant oxide by heating, and in the second drying step, the second ceramic particles in a spherical shape are formed from the second droplets.

In the production method for the honeycomb filter according to claim 1, in the first introducing step, the first ceramic particles are deposited on the surface of the cell wall to form the first layer.

In the production method for the honeycomb filter according to claim 1, in the second introducing step, the second ceramic particles are deposited on the surface of the first layer to form the second layer.

BRIEF DESCRIPTION OF DRAWINGS

Fig. 1 is a perspective view schematically showing an example of the honeycomb filter according to a first embodiment of the present invention.

Fig. 2(a) is a perspective view schematically showing an example of a honeycomb fired body constituting the honeycomb filter shown in Fig. 1. Fig. 2(b) is an A-A line cross-sectional view of the honeycomb fired body shown in Fig. 2(a).

Fig. 3 is a partial enlarged sectional view of the cell wall of the honeycomb fired body shown in Fig. 2(a) and Fig. 2(b).

Fig. 4 (a) is a schematic view for describing a method for measuring the thickness of a first layer. Fig. 4(b) is a schematic view for describing a method for measuring the thickness of a second layer.

Fig. 5(a), Fig. 5(b), and Fig. 5(c) are side views schematically showing examples of the cell structure of the honeycomb fired body constituting the honeycomb filter according to the first embodiment of the present invention.

Fig. 6 is a sectional view schematically showing an embodiment of a droplet dispersion step and an introducing step.

Fig. 7 is a view for describing a pressure loss measurement apparatus.

Fig. 8 is a view for describing a collecting efficiency measurement apparatus.

DESCRIPTION OF EMBODIMENTS

An embodiment of the present invention will be specifically described. However, the present invention is not limited to the embodiment, and may be appropriately modified and applied so as not to deviate from the subject matter of the present invention.

(First embodiment)

The following description will discuss the first embodiment of the present invention, which is one embodiment of a production method for a honeycomb filter according to the present invention.
First, a production method for a honeycomb filter according to the first embodiment of the present invention will be described.
The production method for the honeycomb filter according to the first embodiment of the present invention includes:

a ceramic honeycomb substrate including a porous honeycomb fired body having a large number of cells placed longitudinally in parallel with one another with a cell wall interposed therebetween, each of the cells passing fluid therethrough and being sealed at either a fluid inlet end or a fluid outlet end of the cell; and
an auxiliary filter layer including at least two layers made of a heat-resistant oxide, the auxiliary filter layer being formed on a surface of the cell wall of the cell opened at the fluid inlet end and sealed at the fluid outlet end, and on a pore portion in the cell wall, wherein
said auxiliary filter layer includes a first layer in which particles having a first average particle diameter are deposited on the surface of the cell wall, and a second layer in which particles having a smaller second average particle diameter than the first average particle diameter are deposited on a surface of the first layer, said method comprising the following steps:
a honeycomb fired body production step producing a porous honeycomb fired body by using a ceramic powder, the porous honeycomb fired body having a large number of cells placed longitudinally in parallel with one another with a cell wall interposed therebetween, each of the cells being sealed at either a fluid inlet end or a fluid outlet end of the cell; and
an auxiliary filter layer formation step of forming an auxiliary filter layer including at least two layers, on a surface of said cell wall, wherein
said auxiliary filter layer formation step includes:

a first droplet dispersion step of dispersing first droplets containing a raw material for first ceramic particles in first carrier gas; a first drying step of drying said first carrier gas at 100 to 800°C,
a first introducing step of introducing said dried first carrier gas into the cell opened at the fluid inlet end and sealed at the fluid outlet end;
a second droplet dispersion step of dispersing second droplets containing a raw material for second ceramic particles and having a smaller average droplet diameter than sai frist droplet, in second carrier gas; a second drying step of drying said second carrier gas at 100 to 800°C, and
a second introducing step of introducing said dried second carrier gas into the cell opened at the fluid inlet end and sealed at the fluid outlet end, after introducing said first carrier gas,
wherein said first droplets include a heat-resistant oxide precursor as said raw material, the heat-resistant oxide precursor becoming a heat-resistant oxide by heating, and
in said first drying step, said first ceramic particles in a spherical shape are formed from said first droplets, wherein said second droplets include a heat-resistant oxide precursor as said raw material, the heat-resistant oxide precursor becoming a heat-resistant oxide by heating, and

in said spherical shape are formed from said second droplets, wherein in said first introducing step, said first ceramic particles are deposited on the surface of said cell wall form said first layer, and
in said second introducing step, said second ceramic particles are deposited on the surface of said first layer to form said second layer.

In the production method for the honeycomb filter according to the first embodiment of the present invention, the ceramic honeycomb substrate (ceramic block) is configured of a plurality of honeycomb fired bodies. The large number of cells of the honeycomb fired bodies constituting the honeycomb filter include large volume cells and small volume cells, and each of the large volume cells has a larger area of the cross section perpendicular to the longitudinal direction than each of the small volume cells.

The production method for the honeycomb filter according to the first embodiment of the present invention includes the auxiliary filter layer formed on the surface of the cell wall of the ceramic honeycomb substrate including the honeycomb fired bodies.

In this specification, the "ceramic honeycomb substrate" having no auxiliary filter layer on the surface of the cell wall and the "honeycomb filter" having the auxiliary filter layer on the surface of the cell wall are distinguished from each other.

In the following explanation, the expression of the cross section of the honeycomb fired body refers to the cross section of the honeycomb fired body perpendicular to the longitudinal direction. Similarly, the expression of the cross-sectional area of the honeycomb fired body refers to the area of the cross section of the honeycomb fired body perpendicular to the longitudinal direction.

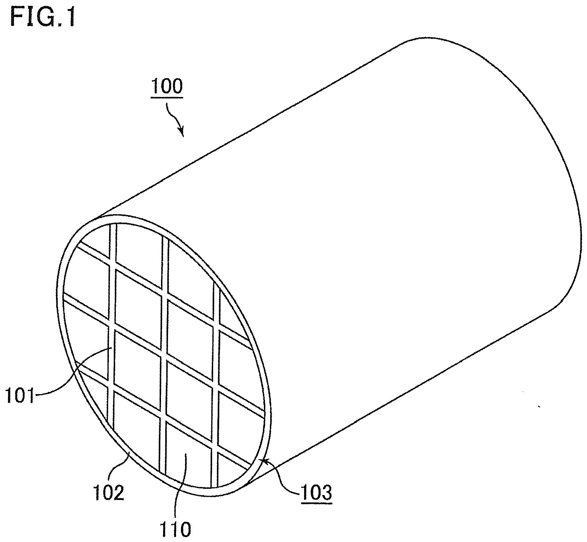

Fig. 1 is a perspective view schematically showing an example of the honeycomb filter according to the first embodiment of the present invention.

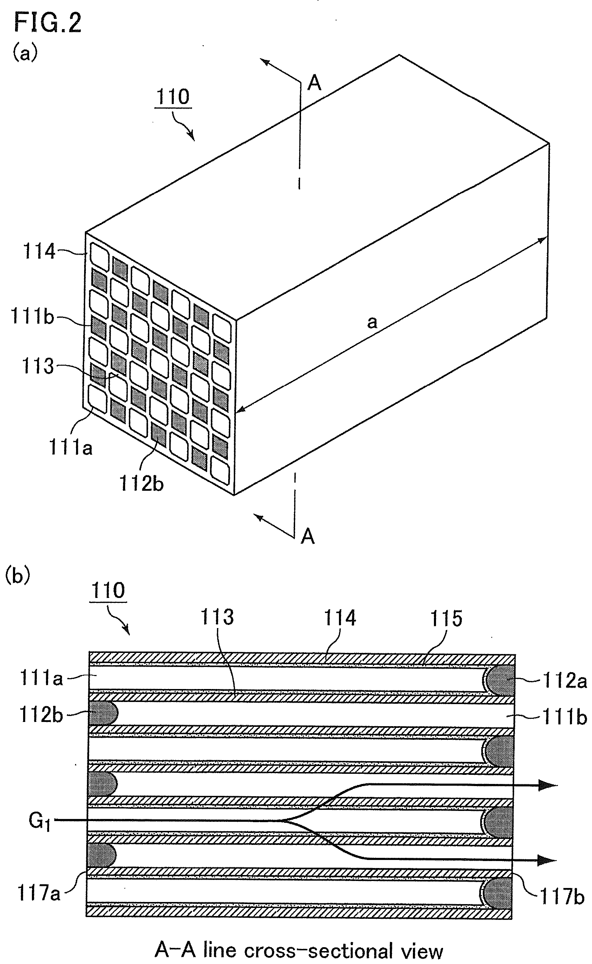

Fig. 2(a) is a perspective view schematically showing an example of a honeycomb fired body constituting the honeycomb filter shown in Fig. 1. Fig. 2 (b) is an A-A line cross-sectional view of the honeycomb fired body shown in Fig. 2(a).

In the honeycomb filter 100 in Fig. 1, a plurality of honeycomb fired bodies 110 are bonded together via adhesive layers 101 to constitute a ceramic honeycomb substrate (ceramic block) 103, and a peripheral coating layer 102 for preventing leakage of exhaust gases is formed on the periphery of the ceramic honeycomb substrate (ceramic block) 103. The peripheral coating layer may be formed as needed.

The honeycomb filter formed by bonding the plurality of honeycomb fired bodies together is also referred to as an aggregated honeycomb filter.

The honeycomb fired bodies 110 constituting the honeycomb filter 100 will be described later, and are preferably porous bodies made of silicon carbide or silicon-containing silicon carbide.

In the honeycomb fired body 110 shown in Fig. 2(a) and Fig. 2(b), a large number of cells 111a and 111b are separated by cell walls 113, and placed in parallel in the longitudinal direction (direction of an arrow a in Fig. 2(a)), and a peripheral wall 114 is formed around the honeycomb fired body. One end of each of the cells 111a and 111b is sealed with a sealing material 112a or 112b.

As shown in Fig. 2(b), an auxiliary filter layer 115 is formed on the surface of the cell wall 113 in the honeycomb fired body 110.

In the honeycomb fired body 110 shown in Fig. 2(a), the auxiliary filter layer 115 is not shown.

In the honeycomb fired body 110 shown in Fig. 2(a) and Fig. 2(b), the large volume cells 111a each having a larger cross-sectional area perpendicular to the longitudinal direction than the small volume cells 111b, and the small volume cells 111b having a smaller cross-sectional area perpendicular to the longitudinal direction than the large volume cells 111a are alternately disposed.

The cross section of the large volume cell 111a perpendicular to the longitudinal direction has a substantially octagonal shape, and the cross section of the small volume cell 111b perpendicular to the longitudinal direction has a substantially quadrangular shape.

In the honeycomb fired body 110 shown in Fig. 2(a) and Fig. 2(b); the large volume cell 111a is opened at an end on a first end face 117a side of the honeycomb fired body 110, and is sealed with the sealing material 112a at an end of a second end face 117b of the honeycomb fired body 110. On the other hand, the small volume cell 111b is open at an end of the second end face 117b side of the honeycomb fired body 110, and is sealed with the sealing material 112b on the first end face 117a side of the honeycomb fired body 110.

Accordingly, as shown in Fig. 2(b), exhaust gases $G_1$ (in Fig. 2(b), $G_1$ indicate exhaust gases and arrows indicate the flowing direction of the exhaust gases) flows into the large volume cell 111a surely passes through the cell wall 113 interposed between the large volume cells 111a and the small volume cell 111b and then, flows out from the small volume cells 111b. Because PM in the exhaust gases $G_1$ is collected during passage of the exhaust gases through the cell wall 113, the cell wall 113 interposed between the large volume cell 111a and the small volume cell 111b functions as a filter.

In this manner, gases such as exhaust gases can pass through the large volume cells 111a and the small volume cells 111b of the honeycomb fired body 110. When gases such as exhaust gases pass in the direction shown in Fig. 2(b), an end on the first end face 117a side of the honeycomb fired body 110 (an end at which the small volume cells 111b are sealed) is referred to as a fluid inlet end, and an end on the second end face 117b side of the honeycomb fired body 110 (an end at which large volume cells 111a are sealed) is referred to as a fluid outlet end.

That is, the large volume cells 111a opened at the fluid inlet end are cells 111a on the fluid inlet side, and the small volume cells 111b opened at the fluid outlet end are cells 111b on the fluid outlet side.

The auxiliary filter layer will be described below.

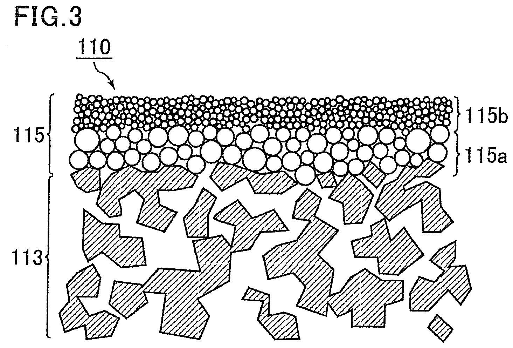

Fig. 3 is a partial enlarged sectional view of the cell wall of the honeycomb fired body shown in Fig. 2(a) and Fig. 2(b).

As shown in Fig. 3, the auxiliary filter layer 115 including two layers. Specifically, the auxiliary filter layer 115 includes a first layer 115a deposited on the surface of the cell wall 113 and a second layer 115b deposited on the surface of the first layer 115a.

The auxiliary filter layer 115 is formed on the surface of the cell wall 113 as well as a pore portion of the cell wall 113.

In the production method for the honeycomb filter according to the first embodiment of the present invention, the average particle diameter of the particles constituting the first layer of the auxiliary filter layer (hereinafter referred to as first average particle diameter) is larger than the average particle diameter of the particles constituting the second layer of the auxiliary filter layer (hereinafter referred to as second average particle diameter) . That is, the second average particle diameter is smaller than the first average particle diameter.

In the production method for the honeycomb filter according to the first embodiment of the present invention, the first average particle diameter is preferably from 1.2 to 2.5 $\mu$m, more preferably from 1. 4 to 2.4 $\mu$m, and still more preferably from 1.5 to 2.3 $\mu$m.

When the first average particle diameter is less than 1.2 $\mu$m, the particles constituting the first layer enter into pores of the cell walls to easily clog the pores, so that the pressure loss tends to increase.

On the other hand, when the first average particle diameter exceeds 2.5 $\mu$m, the particles constituting the second layer enter into pores formed between the particles of the first layer, so that the pressure loss tends to increase.

In the production method for the honeycomb filter according to the first embodiment of the present invention, the second average particle diameter is preferably from 0.2 to 1.2 $\mu$m, more preferably from 0.3 to 1.1 $\mu$m, and still more preferably from 0.5 to 1.0 $\mu$m.

The second average particle diameter is less than 0.2 $\mu$m, particles constituting the second layer enter into pores formed between the particles of the first layer to easily clog the pores, so that the pressure loss tends to increase.

On the other hand, when the second average particle diameter exceeds 1.2 $\mu$m, PM easily passes through the auxiliary filter layer, so that a sufficient collecting efficiency is hardly obtained. Further, depth filtration of PM in the second layer tends to occur so that the pressure loss tends to increase.

The first average particle diameter and the second average particle diameter can be measured according to the following method.

The honeycomb fired bodies constituting the honeycomb filter are processed to prepare a sample of 10 mm x 10 mm x 10 mm.

A surface of any one site of the prepared sample is observed with a scanning electron microscope (SEM). At this time, the particles constituting the first layer of the auxiliary filter layer are placed within one viewing field. The SEM observation conditions are an accelerating voltage of 15.00kV, a working distance (WD) of 15.00 mm, and a magnification of 10000 times.

Next, the diameters of all particles within one viewing field are visually measured. An average value of the diameters of all particles measured within one viewing field is defined as the first average particle diameter.

Similarly, the particles constituting the second layer of the auxiliary filter layer are placed within one viewing field, and are observed with the SEM, and the diameters of all particles within one viewing field are visually measured. An average value of the diameters of all particles measured within one viewing field is defined as the second average particle diameter.

A boundary between the first layer and the second layer will be described in a method for measuring the thickness of the auxiliary filter layer.

In the production method for the honeycomb filter according to the first embodiment of the present invention, a ratio of the first average particle diameter to the second average particle diameter, namely, (first average particle diameter) : (second average particle diameter) is preferably from 10:1 to 1.5:1, and more preferably from 8:1 to 2:1.

When the ratio of the first average particle diameter to the second average particle diameter is in the above numerical range, depth filtration of the particles constituting the second layer in the first layer can be prevented, so that it is possible to effectively suppress an increase in pressure loss and to maintain a high PM collecting efficiency.

In the production method for the honeycomb filter according to the first embodiment of the present invention, the auxiliary filter layer (the first layer and the second layer) is made of ceramic particles, and preferably made of spherical ceramic particles.

In the production method for the honeycomb filter according to the first embodiment of the present invention, preferably, both the first layer and the second layer is made of a heat-resistant oxide. If the auxiliary filter layer is made of the heat-resistant oxide, failures such as melting of the auxiliary filter layer in the regeneration process of burning PM are not caused. Thus, a honeycomb filter having excellent heat resistance can be produced.

Examples of the heat-resistant oxide include alumina, silica, mullite, ceria, zirconia, cordierite, zeolite, and titania. These may be used alone or in combination.

Among the heat-resistant oxide, alumina is preferable.

When both the first layer and the second layer are made of the heat-resistant oxide, the heat-resistant oxide constituting the first layer and the heat-resistant oxide constituting the second layer may be the same or different, but preferably are the same.

In the production method for the honeycomb filter according to the first embodiment of the present invention, the thickness of the first layer is preferably from 5 to 20 $\mu$m, more preferably from 8 to 18 $\mu$m, and still more preferably from 10 to 15 $\mu$m.

In the production method for the honeycomb filter according to the first embodiment of the present invention, the thickness of the second layer is preferably from 5 to 50 $\mu$m, more preferably from 10 to 40 $\mu$m, and still more preferably from 15 to 35 $\mu$m.

In the production method for the honeycomb filter according to the first embodiment of the present invention, the thickness of the auxiliary filter layer is preferably from 10 to 70 $\mu$m, more preferably from 18 to 58 $\mu$m, and still more preferably from 25 to 50 $\mu$m.

When the thickness of the auxiliary filter layer is less than 10 $\mu$m, the PM collecting efficiency decreases, and depth filtration of PM in the auxiliary filter layer tends to occur, so that the pressure loss of the honeycomb filter tends to increase.

On the other hand, when the thickness of the auxiliary filter layer exceeds 70 $\mu$m, the auxiliary filter layer becomes too thick so that the pressure loss tends to increase.

The thickness of the auxiliary filter layer can be measured according to the following method.

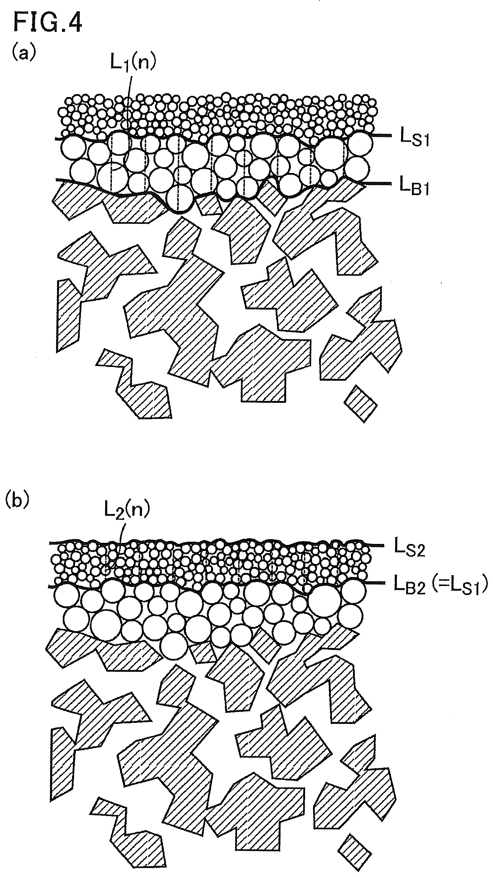

Fig. 4(a) is a schematic view for describing a method for measuring the thickness of the first layer. Fig. 4(b) is a schematic view for describing a method for measuring the thickness of the second layer.

First, in the same manner as in measuring the first average particle diameter and the second average particle diameter, the honeycomb fired bodies constituting the honeycomb filter are processed to prepare a sample of 10 mm x 10 mm x 10 mm.

A cross section of a cell in any one part of the prepared sample is observed with a scanning electron microscope (SEM). The SEM observation conditions are an accelerating voltage of 15.00kV, a working distance (WD) of 15.00 mm, and a magnification of from 500 to 1000 times.

For easy understanding, Fig. 4(a) and Fig. 4(b) show schematic views in place of actual SEM photographs.

Next, as shown in Fig. 4(a), a line is drawn along lower faces of the particles constituting the first layer, and is defined as a lower face $L_{B1}$. A line is drawn along upper faces of the particles constituting the first layer, and is defined as an upper face $L_{S1}$.

Subsequently, the sample is divided into 50 parts in the horizontal direction of the SEM photograph (longitudinal direction of the honeycomb fired body). The distance between the upper face $L_{S1}$ and the lower face $L_{B1}$ is measured in the divided 50 parts, and a thickness of the first layer at the $n^{th}$ part (n is an integer of 1 to 50) is defined as $L_1$ (n). An average value of $L_1$ (1) to $L_1$ (50) is defined as the thickness of the first layer.

Similarly, as shown in Fig. 4(b), a line is drawn along lower faces of the particles constituting the second layer, and is defined as a lower face $L_{B2}$. A line is drawn along upper faces of the particles constituting the second layer, and is defined as an upper face $L_{S2}$. The lower face $L_{B2}$ matches the upper face $L_{S1}$.

Subsequently, the sample is divided into 50 parts in the horizontal direction of the SEM photograph. The distance between the upper face $L_{S2}$ and the lower face $L_{B2}$ is measured in the divided 50 parts, and a thickness of the second layer at the $n^{th}$ part is defined as $L_2$ (n). An average value of $L_2$ (1) to $L_2$ (50) is defined as the thickness of the second layer.

The sum of the thickness of the first layer and the thickness of the second layer is defined as the thickness of the auxiliary filter layer.

In the production method for the honeycomb filter according to the first embodiment of the present invention, the auxiliary filter layer is formed on the surface of the cell wall of only the cell opened at the fluid inlet end and sealed at the fluid outlet end.

Because exhaust gases flow into cells from the fluid inlet side of the honeycomb filter, more PM in the exhaust gases is deposited on the cell wall of the cell opened at the fluid inlet end and sealed at the fluid outlet end. Accordingly, when the auxiliary filter layer is formed on the surface of the cell wall of only the cell opened at the fluid inlet end and sealed at the fluid outlet end, the auxiliary filter layer can collect PM, preventing depth filtration.

In the production method for the honeycomb filter according to the first embodiment of the present invention, although the auxiliary filter layer is formed on the entire surface of the cell wall of the cell opened at the fluid inlet end and sealed at the fluid outlet end, the auxiliary filter layer may be formed on a part of the surface of the cell wall.

In the production method for the honeycomb filter according to the first embodiment of the present invention, the cross sections of the large volume cells and the small volume cells in the honeycomb fired bodies perpendicular to the longitudinal direction may take following shapes.

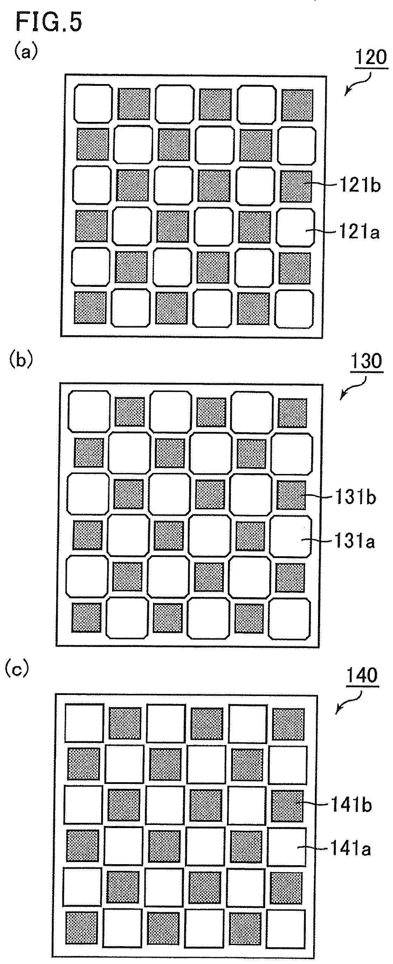

Fig. 5(a), Fig. 5(b), and Fig. 5(c) are side views schematically showing examples of the cell structure of the honeycomb fired body constituting the honeycomb filter according to the first embodiment of the present invention.

Fig. 5(a), Fig. 5(b), and Fig. 5(c) do not show the auxiliary filter layer.

In a honeycomb fired body 120 shown in Fig. 5(a), cross sections of large volume cells 121a perpendicular to the longitudinal direction each have a substantially octagonal shape, cross sections of small volume cells 121b perpendicular to the longitudinal direction each have a substantially quadrangular shape, and the large volume cells 121a and the small volume cells 121b are alternately disposed. Similarly, in a honeycomb fired body 130 shown in Fig. 5(b), cross sections of large volume cells 131a perpendicular to the longitudinal direction each have a substantially octagonal shape, cross sections of small volume cells 131b perpendicular to the longitudinal direction each have a substantially quadrangular shape, and the large volume cells 131a and the small volume cells 131b are alternately disposed. The honeycomb fired body 120 shown in Fig. 5(a) is different from the honeycomb fired body 130 shown in Fig. 5(b) in an area ratio of the cross sectional area of the large volume cell perpendicular to the longitudinal direction relative to the cross sectional area of the small volume cell perpendicular to the longitudinal direction (the cross sectional area of the large volume cell perpendicular to the longitudinal direction/the cross sectional area of the small volume cell perpendicular to the longitudinal direction) .

In a honeycomb fired body 140 shown in Fig. 5(c), cross sections of large volume cells 141a perpendicular to the longitudinal direction each have a substantially quadrangular shape, cross sections of small volume cells 141b perpendicular to the longitudinal direction each have a substantially quadrangular shape, and the large volume cells 141a and the small volume cells 141b are alternately disposed.

In the production method for the honeycomb filter according to the first embodiment of the present invention, the area ratio of the cross sectional area of the large volume cell perpendicular to the longitudinal direction relative to the cross sectional area of the small volume cell perpendicular to the longitudinal direction (the cross sectional area of the large volume cell perpendicular to the longitudinal direction/the cross sectional area of the small volume cell perpendicular to the longitudinal direction) is preferably from 1.4 to 2.8, more preferably from 1.5 to 2.4.

By setting the cells on the fluid inlet side to the large volume cells and the cells on the fluid outlet side to the small volume cells, more PM can be deposited on the cells on the fluid inlet side (large volume cells) . However, when the area ratio is less than 1.4, since the difference between the cross sectional area of the large volume cell and the cross sectional area of the small volume cell is small, the effect of the large volume cells and the small volume cells cannot be obtained so much. On the other hand, when the area ratio exceeds 2.8, the cross sectional area of the small volume cell perpendicular to the longitudinal direction becomes so small that the pressure loss due to friction caused when gases such as exhaust gases pass through the cells on the fluid outlet side (small volume cells) increases.

In the production method for the honeycomb filter according to the first embodiment of the present invention, the ceramic honeycomb substrate including the honeycomb fired bodies is manufactured, and the auxiliary filter layer is formed on the surface of the cell walls of the ceramic honeycomb substrate.

Prior to the explanation of other steps, the auxiliary filter layer formation step will be described below.

In the explanation of this embodiment, the material for the auxiliary filter layer is a heat-resistant oxide.

The step of manufacturing the ceramic honeycomb substrate including the honeycomb fired bodies will be described later.

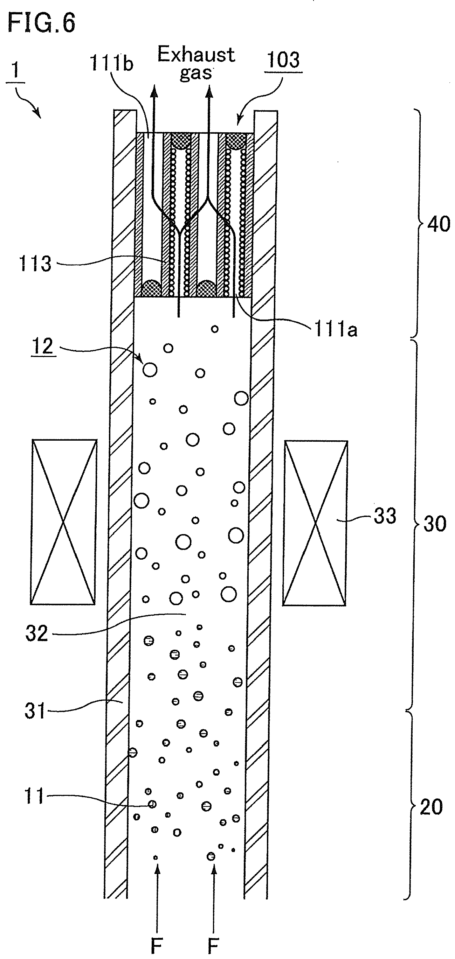

Fig. 6 is a sectional view schematically showing an embodiment of a droplet dispersion step and an introducing step.

Fig. 6 shows a carrier gas introducing apparatus 1 that introduces carrier gas into cells of the ceramic honeycomb substrate.

The carrier gas introducing apparatus 1 includes a droplet dispersion section 20 for dispersing droplets in the carrier gas, a pipe section 30 through which the carrier gas in which the droplets are dispersed passes, and an introducing section 40 for introducing the carrier gas into the cells of the ceramic honeycomb substrate.

An example of a first droplet dispersion step and a first introducing step using the carrier gas introducing apparatus 1 will be described below.

In the carrier gas introducing apparatus 1, carrier gas F flows from the bottom toward the top in Fig. 6. In the carrier gas introducing apparatus 1, the carrier gas F is provided from below the carrier gas introducing apparatus 1 and is discharged above the introducing section 40 through the droplet dispersion section 20, the pipe section 30, and the introducing section 40.

The carrier gas F is pressurized from the bottom toward the top in Fig. 6 by a pressure difference caused by a pressure applied from below the carrier gas introducing apparatus or suction applied from above the carrier gas introducing apparatus, and flows upward in the carrier gas introducing apparatus 1.

Gas that does not react at a temperature up to 800°C and does not react with components in the droplets dispersed in the carrier gas is used as the carrier gas.

Examples of the carrier gas include air, nitrogen gas, and argon gas.

In the droplet dispersion section 20 of the carrier gas introducing apparatus 1, an oxide-containing solution filled in a tank, which is not shown in the Figure, is sprayed to form of droplets 11, and the droplets 11 are dispersed in carrier gas F.

The oxide-containing solution is a concept including a solution containing a heat-resistant oxide precursor from which the heat-resistant oxide is formed by heating, and a slurry containing heat-resistant oxide particles.

The heat-resistant oxide precursor means a compound from which the heat-resistant oxide is derived by heating.

Examples of the heat-resistant oxide precursor include hydroxide, carbonate, nitrate, and hydrate of a metal constituting the heat-resistant oxide.

Examples of the heat-resistant oxide precursor in the case where the heat-resistant oxide is alumina, that is, an alumina precursor include aluminum nitrate, aluminum hydroxide, boehmite, and diaspore.

The slurry containing heat-resistant oxide particles is a solution in which heat-resistant oxide particles are suspended in water.

The droplets 11 dispersed in the carrier gas F flow upward in the carrier gas introducing apparatus 1 with the carrier gas F, and pass through the pipe section 30.

The pipe section 30 of the carrier gas introducing apparatus 1 is a pipe through which the carrier gas F, in which the droplets 11 are dispersed, passes.

A path 32 of the pipe section 30, through which the carrier gas F passes, is a space surrounded with a pipe wall 31 of the pipe.

In the carrier gas introducing apparatus 1 in this embodiment, the pipe section 30 is provided with a heating mechanism 33.

Examples of the heating mechanism 33 include an electric heater.

In this embodiment, the pipe wall 31 of the pipe is heated using the heating mechanism 33 and the carrier gas F in which the droplets 11 are dispersed passes through the pipe. Then, the carrier gas F passing through the pipe section 30 is preferably heated, thereby heating the droplets 11 dispersed in the carrier gas F.

When the droplets 11 are heated, a liquid component in the droplets evaporates to form spherical ceramic particles 12. In Fig. 6, the spherical ceramic particles 12 are represented by white circles.

When the droplets include the heat-resistant oxide precursor, the heat-resistant oxide precursor becomes the heat-resistant oxide (spherical ceramic particles) by heating the carrier gas.

In this embodiment, preferably, the pipe wall 31 of the pipe is heated to 100 to 800°C using the heating mechanism 33, and the carrier gas F in which the droplets 11 are dispersed is passed through the pipe for 0.1 to 3.0 seconds.

When the temperature of the heated pipe is lower than 100°C, and time during which the carrier gas passes through the pipe is less than 0.1 second, it is hard to evaporate moisture in the droplets. On the other hand, when the temperature of the heated pipe exceeds 800°C, and time during which the carrier gas passes through the pipe exceeds 3.0 seconds, energy necessary for producing the honeycomb filter becomes too large, decreasing the production efficiency of the honeycomb filter.

In this embodiment, a length of the pipe is not limited, but is preferably from 500 to 3000 mm.

When the length of the pipe is less than 500 mm, even if the speed at which the carrier gas passes through the pipe is delayed, it is hard to evaporate moisture in the droplets. On the other hand, when the length of the pipe exceeds 3000 mm, an apparatus for producing the honeycomb filter becomes too large, decreasing the production efficiency of the honeycomb filter.

The spherical ceramic particles 12 flows upward in the carrier gas introducing apparatus 1 with the carrier gas F while being dispersed in the carrier gas F, and then flows into cells of a ceramic honeycomb substrate 103 in the introducing section 40.

In this embodiment, a ceramic block formed by bonding a plurality of honeycomb fired bodies together via an adhesive layer is used as the ceramic honeycomb substrate.

The ceramic honeycomb substrate 103 is disposed in the upper portion of the carrier gas introducing apparatus 1 so as to close an outlet of the carrier gas introducing apparatus 1.

Thus, the carrier gas F surely flows into the ceramic honeycomb substrate 103.

Fig. 6 schematically shows the cross section of the honeycomb fired body constituting the ceramic block (the cross section shown in Fig. 2 (b)) as the cross section of the ceramic honeycomb substrate 103.

In the ceramic honeycomb substrate 103, ends of the cells 111a on the fluid inlet side are opened, and ends of the cells 111b on the fluid outlet side are sealed.

Thus, the carrier gas F flows into the ceramic honeycomb substrate 103 from openings of the cells 111a on the fluid inlet side.

When the carrier gas F, in which the spherical ceramic particles 12 are dispersed, flows into the cells 111a on the fluid inlet side of the ceramic honeycomb substrate 103, the spherical ceramic particles 12 are deposited on the surface of the cell wall 113 of the ceramic honeycomb substrate 103.

In this embodiment, preferably, the ceramic honeycomb substrate 103 is heated to 100 to 800°C, and the carrier gas F is introduced to the heated cell.

When the ceramic honeycomb substrate 103 is heated to 100 to 800°C, even if any liquid component remains in the spherical ceramic particles 12, the liquid component evaporates, and dried spherical ceramic particles in powder form are deposited on the surface of the cell wall.

The carrier gas F flows into the ceramic honeycomb substrate 103 through the openings of the cells 111a on the fluid inlet side, passes the cell walls 113 of the ceramic honeycomb substrate 103, and flows out of the openings of the cells 111b of the fluid outlet side.

The first introducing step is performed by using such procedure.

In the first introducing step, the spherical ceramic particles can be deposited on the surface of the cell wall.

Subsequently, the step of heating the ceramic honeycomb substrate is preferably performed.

Preferably, the ceramic honeycomb substrate in which the spherical ceramic particles are adhered to the cell walls in the carrier gas introducing step is heated under a temperatures of 900 to 1500°C by use of a furnace.

A desirable heating atmosphere is an air atmosphere, nitrogen atmosphere, or argon atmosphere.

Then, the spherical ceramic particles adhered to the surface of the cell wall are thermally contracted by heat sintering, and are strongly fixed to the surface of the cell wall.

Through the above-mentioned steps, a first layer of the auxiliary filter layer can be formed on the surface of the cell walls.

All of the step of heating the carrier gas (referred to as a first drying step), the step of introducing the carrier gas while heating the ceramic honeycomb substrate, and the step of introducing the carrier gas and then heating the ceramic honeycomb substrate (referred to as a first heating step) are not necessarily performed, and at least one of them may be performed.

Preferably, the first drying step and the first heating step among the steps are performed.

Then, the second droplet dispersion step and the second introducing step are performed.

In the second droplet dispersion step, droplets having an average droplet diameter that is different from that in the first droplet dispersion step are used. Specifically, the average particle diameter of droplets in the second droplet dispersion step is made smaller than the average particle diameter of droplets in the first droplet dispersion step.

The second droplet dispersion step is the same as the first droplet dispersion step except the above-mentioned point.

The second introducing step is the same as the above-mentioned first introducing step.

In the second introducing step, spherical ceramic particles can be deposited on the surface of the first layer.

A method of making the average particle diameter of droplets in the second droplet dispersion step smaller than the average particle diameter of droplets in the first droplet dispersion step is not limited, but the spraying pressure in the second droplet dispersion step is preferably made higher than the spraying pressure of the first droplet dispersion step.

As the spraying pressure is higher, smaller droplets can be made. Accordingly, by making the spraying pressure in the second droplet dispersion step higher than the spraying pressure in the first droplet dispersion step, the size of the spherical ceramic particles deposited to form the second layer of the auxiliary filter layer can be made smaller than the size of the spherical ceramic particles deposited to form the first layer of the auxiliary filter layer.

Through the steps, the second layer of the auxiliary filter layer can be formed on the surface of the first layer of the auxiliary filter layer.

In the same manner as in forming the first layer of the auxiliary filter layer, the step of heating the carrier gas (also referred to as second drying step), the step of introducing the carrier gas while heating the ceramic honeycomb substrate, and the step of introducing the carrier gas and then heating the ceramic honeycomb substrate (also referred to as second heating step) may be performed. However, all of the steps are not necessarily, and at least one step needs to be performed.

The second drying step and the second heating step among the steps are preferably performed.

A process of manufacturing the ceramic honeycomb substrate including the honeycomb fired bodies in the production method for a honeycomb filter according to the first embodiment of the present invention will be described below.

The ceramic honeycomb substrate to be manufactured as follows is a ceramic block formed by bonding the honeycomb fired bodies together via an adhesive layer.

The case of using a silicon carbide as ceramic powder will be described.

(1) A molding step for manufacturing a honeycomb molded body is performed by extruding a wet mixture containing the ceramic powder and a binder.

Specifically, first, silicon carbide powder having a different average particle diameter as the ceramic powder, an organic binder, liquid plasticizer, a lubricant, and water are mixed to prepare a wet mixture for producing the honeycomb molded body.

Subsequently, the wet mixture is extruded with an extruder to manufacture a honeycomb molded body of a predetermined shape.

At this time, the honeycomb molded body is manufactured using a die for the cross-sectional shape of the cell structure (cell shape and cell arrangement) as shown in Fig. 2 (a) and Fig. 2(b).

(2) The honeycomb molded body is cut to have a predetermined length, and the cut honeycomb molded body is dried with a microwave drier, hot air drier, dielectric drier, decompression drier, vacuum drier, or freeze drier, and a sealing material paste for a sealing material is filled in the predetermined cell to seal the cell.

The wet mixture may be used as the sealing material paste.

(3) A degreasing step is performed by heating the honeycomb molded body in a degreasing furnace to remove organic substances in the honeycomb molded body and then, the degreased honeycomb molded body is conveyed to a firing furnace to perform a firing step, thereby manufacturing the honeycomb fired body as shown in Fig. 2(a) and Fig. 2(b).

The sealing material paste filled in the end of the cell is fired by heating to become the sealing material.

Conditions of the cutting step, the drying step, the sealing step, the degreasing step, and the firing step may be conditions used in the conventional method of manufacturing the honeycomb fired body.

(4) A bonding step is performed by sequentially stacking a plurality of honeycomb fired bodies on a support table and bonding the honeycomb fired bodies together with an adhesive paste to manufacture a honeycomb aggregated body formed of the plurality of stacked honeycomb fired bodies.

Examples of the adhesive paste include an inorganic binder, an organic binder, and inorganic particles. The adhesive paste further includes inorganic fibers and/or whisker.

(5) The honeycomb aggregated body is heated to heat and solidify the adhesive paste, to form an adhesive layer, and a quadrangular pillar- shaped ceramic block is manufactured using the adhesive layer.

Conditions for heating and solidifying the adhesive paste may be conditions used in the conventional method of manufacturing the honeycomb filter.

(6) A cutting step is performed by cutting the ceramic block.

Specifically, the outer periphery of the ceramic block is cut with a diamond cutter to manufacture a ceramic block having a substantially round pillar-shaped.

(7) A peripheral coating layer formation step is performed by applying a peripheral coating material paste to the outer peripheral face of the substantially round pillar-shaped ceramic block, and drying and solidifying the peripheral coating material paste to form a peripheral coating layer.

The adhesive paste may be used as the peripheral coating material paste. A paste that is different from the adhesive paste in composition may be used as the peripheral coating material paste.

The peripheral coating layer is not necessarily provided, and may be provided as needed.

The shape of the outer periphery of the ceramic block is adjusted by providing the peripheral coating layer to form the round pillar-shaped ceramic honeycomb substrate.

Through the above-mentioned steps, the ceramic honeycomb substrate including the honeycomb fired bodies can be manufactured.

Then, the above-mentioned auxiliary filter layer formation step can be applied to the ceramic honeycomb substrate to produce the honeycomb filter according to the first embodiment of the present invention.

Effects of the honeycomb filter and the production method for the honeycomb filter according to the first embodiment of the present invention will be described below.

(1) In the honeycomb filter in this embodiment, the auxiliary filter layer including two layers is formed on the surface of the cell and on the pore portion in the cell wall.

The first layer of the auxiliary filter layer is formed by depositing particles having a relatively large diameter on the surface of the cell wall. This can prevent the particles constituting the auxiliary filter layer from entering into pores of the cell wall to clog the pores. Thereby, an increase in the pressure loss can be suppressed.

(2) In the honeycomb filter in this embodiment, the second layer of the auxiliary filter layer is formed by depositing particles having a relatively small diameter on the first layer of the auxiliary filter layer. The second layer has a smaller pore diameter and thus, can collect PM that can be hardly collected by the first layer having a larger pore diameter. As a result, the second layer of the auxiliary filter layer can prevent PM passing through the auxiliary filter layer. Thus, a high PM collecting efficiency can be maintained.

The second layer of the auxiliary filter layer can prevent depth filtration of PM in the auxiliary filter layer. As a result, an increase in the pressure loss can be suppressed.

(3) In the honeycomb filter in this embodiment, by making the diameter of particles constituting the auxiliary filter layer smaller as the particles are further from the surface of the cell wall, it is possible to suppress an increase in the pressure loss and maintaining a high PM collecting efficiency.

(4) According to the production method for the honeycomb filter in this embodiment, the honeycomb filter in this embodiment can be preferably produced.

Therefore, the honeycomb filter capable of suppressing an increase in the pressure loss and maintaining a high PM collecting efficiency can be produced.

(Example)

An Example disclosing the production method for a honeycomb filter according to the first embodiment of the present invention will be described below. The present invention is not limited to the Example.

(Example 1)

(Manufacture of ceramic honeycomb substrate)

First, 54.6% by weight of coarse silicon carbide powder having an average particle diameter of 22 $\mu$m and 23.4% by weight of fine silicon carbide powder having an average particle diameter of 0.5 $\mu$m were mixed, and to the resulting mixture were added and kneaded 4.3% by weight of an organic binder (methyl cellulose), 2.6% by weight of a lubricant (UNILUB, produced by NOF CORPORATION), 1.2% by weight of glycerin, and 13.9% by weight of water to obtain a wet mixture. The wet mixture was then subjected to a molding step for extrusion molding.

In this step, a raw honeycomb molded body having the same shape as the honeycomb fired body 110 shown in Fig. 2(a) with no cells being sealed was manufactured.

Next, the raw honeycomb molded body was dried using a microwave drier to manufacture a dried body of the honeycomb molded body. Then, predetermined cells of the dried body of the honeycomb molded body were filled with a sealing material paste to seal the cells. The wet mixture was used as the sealing material paste. After sealing of the cells, the dried body of the honeycomb molded body filled with the sealing material paste was dried again using the drier.

Subsequently, the dried body of the honeycomb molded body with cells being sealed was degreased at 400°C, and further fired at 2200°C under normal pressure argon atmosphere for 3 hours.

Accordingly, a honeycomb fired body having a quadrangular pillar shape was manufactured.

The manufactured honeycomb fired body had a height of 34.3 mm, a width of 34.3 mm, a length of 150 mm, an average pore diameter of 24 $\mu$m, a porosity of 64%, the number of cells (cell density) of 54.2 pcs/cm$^2$ (350 pcs/inch$^2$), and a thickness of the cell wall of 0.28 mm (11 mil).

By applying an adhesive paste between the honeycomb fired bodies obtained by the above steps to form an adhesive paste layer, and then heating and solidifying the adhesive paste layer to form an adhesive layer, a ceramic block having a substantially quadrangular pillar shape in which 16 pieces of the honeycomb fired bodies were bonded with one another with an adhesive layer interposed therebetween was manufactured.

As the adhesive paste, an adhesive paste containing 30% by weight of alumina fiber having an average fiber length of 20 $\mu$m, 21% by weight of silicon carbide particles having an average particle diameter of 0.6 $\mu$m, 15% by weight of silica sol, 5.6% by weight of carboxymethyl cellulose, and 28.4% by weight of water was used.

Thereafter, periphery cutting by a diamond cutter was performed on the quadrangular pillar-shaped ceramic block so that a round pillar-shaped ceramic block having a diameter of 142 mm was manufactured.

Next, a peripheral coating material paste was applied on the peripheral face of the round pillar-shaped ceramic block, and the peripheral coating material paste was heated and solidified at 120°C so that a peripheral coating layer was formed on the peripheral part of the ceramic block.

As the peripheral coating material paste, the same paste as the adhesive paste was used.

Through the above-mentioned steps, a round pillar-shaped ceramic honeycomb substrate having a diameter of 143.8 mm and a length of 150 mm was manufactured.

(Auxiliary filter layer formation step)

The auxiliary filter layer was formed on the ceramic honeycomb substrate by using a carrier gas introducing apparatus shown in Fig. 6.

As shown in Fig. 6, the ceramic honeycomb substrate was disposed upper portion of the carrier gas introducing apparatus.

At this time, the ceramic honeycomb substrate was disposed with openings of large volume cells as cells on the fluid inlet side being faced to the lower side of the carrier gas introducing apparatus.

[First droplet dispersion step]

As an oxide-containing solution, a solution containing boehmite as a heat-resistant oxide precursor was prepared. The concentration of boehmite was set to 3.8 mol/L (solid content: 20% by weight).

Then, droplets containing boehmite were dispersed in carrier gas by spraying. The spraying pressure was set to 100 kPa.

[First introducing step]

A wall of a pipe of the carrier gas introducing apparatus was heated to 200°C, and the carrier gas was introduced toward the upper side of the carrier gas introducing apparatus (ceramic honeycomb substrate side) at a flow rate of 1.8 mm/sec to evaporate moisture in the droplets dispersed in the carrier gas. The moisture in the droplets evaporates during passage of the carrier gas through the pipe, thereby converting the droplets into spherical alumina particles.

The length of the pipe was 1200 mm.

The carrier gas, in which the spherical alumina particles were dispersed, was introduced into cells of the ceramic honeycomb substrate to adhere 5 g/L of spherical alumina particles to surfaces of the cell walls.

Then, the ceramic honeycomb substrate was pulled out of the carrier gas introducing apparatus, and the pulled ceramic honeycomb substrate was heated at 1350°C in a firing furnace in an air atmosphere for three hours.

Through the steps, the first layer of the auxiliary filter layer was formed on the surface of the cell wall.

[Second droplet dispersion step and second introducing step]

After that, the same steps as the first droplet dispersion step and the first introducing step were performed except that the spraying pressure was changed to 330 kPa, and the flow rate of carrier gas was changed to 7.0 mm/sec.

Through the steps, the second layer of the auxiliary filter layer was formed on the surface of the first layer of the auxiliary filter layer.

Through the steps, the honeycomb filter in Example 1 was produced. In the honeycomb filter in Example 1, the auxiliary filter layer configured of two layers made of alumina particles was formed on the surface of the cell wall.

(Example 2 to Example 4)

A honeycomb filter was produced in the same manner as in Example 1 except that the spraying pressure and the flow rate of the carrier gas were changed to values shown in Table 1.

(Comparative example 1)

First, a ceramic honeycomb substrate was manufactured in the same manner as in Example 1, and the first droplet dispersion step and the first introducing step were performed. In Comparative example 1, 15g/L of spherical alumina particles were adhered to the surface of the cell wall. Through the steps, the first layer of the auxiliary filter layer was formed on the surface of the cell wall.

In Comparative example 1, the second droplet dispersion step and the second introducing step were not performed. That is, the second layer of the auxiliary filter layer is not formed.

Through the steps, the honeycomb filter in Comparative example 1 was produced. In the honeycomb filter in Comparative example 1, the auxiliary filter layer configured of one layer made of alumina particles was formed on the surface of the cell wall.

[Table 1]

| | Auxiliary filter layer | | | | | |
| --- | --- | --- | --- | --- | --- | --- |
| | First layer | | | Second layer | | |
| | Spraying pressure (kPa) | Flow rate of carrier gas (mm/sec) | Amount of adhered alumina particles (g/L) | Spraying pressure (kPa) | Flow rate of carrier gas (mm/sec) | Amount of adhered alumina particles (g/L) |
| Example 1 | 100 | 1.8 | 5 | 330 | 7.0 | 5 |
| Example 2 | 100 | 1.8 | 5 | 330 | 15.8 | 5 |
| Example 3 | 100 | 4.6 | 5 | 330 | 7.0 | 5 |
| Example 4 | 100 | 4.6 | 5 | 330 | 15.8 | 5 |
| Comparative Example 1 | 100 | 1.8 | 15 | - | - | - |

The honeycomb filters produced in Example 1 to Example 4 and Comparative Example 1 were evaluated as follows.

(Measurement of average particle diameter and thickness of auxiliary filter layer)

The first average particle diameter, second average particle diameter, thickness of the first layer, and thickness of the second layer in each of the honeycomb filters were measured according to the above-mentioned method.

As the SEM, FE-SEM S-4800 manufactured by Hitachi Ltd. was used.

Table 2 shows the measurement results.

[Table 2]

| | Auxiliary filter layer | | | |
| --- | --- | --- | --- | --- |
| | First layer | | Second layer | |
| | First average particle diameter ($\mu$m) | Thickness of first layer ($\mu$m) | Second average particle diameter ($\mu$m) | Thickness of second layer ($\mu$m) |
| Example 1 | 1.2 | 10 | 0.65 | 20 |
| Example 2 | 1.2 | 10 | 0.63 | 20 |
| Example 3 | 1.25 | 12 | 0.65 | 20 |
| Example 4 | 1.25 | 12 | 0.63 | 20 |
| Comparative Example 1 | 1.2 | 30 | - | - |

Table 2 demonstrated that in the honeycomb filters produced in Example 1 to Example 4, an auxiliary filter layer configured of two layers was formed. Specifically, it was found that the auxiliary filter layer included the first layer formed by depositing particles having the first average particle diameter on the surface of the cell wall, and the second layer formed by depositing particles having the second average particle diameter smaller than the first average particle diameter on the first layer.

On the other hand, it was confirmed that, in the honeycomb filter produced in Comparative Example 1, an auxiliary filter layer configured of one layer was formed.

(Measurement of pressure loss)

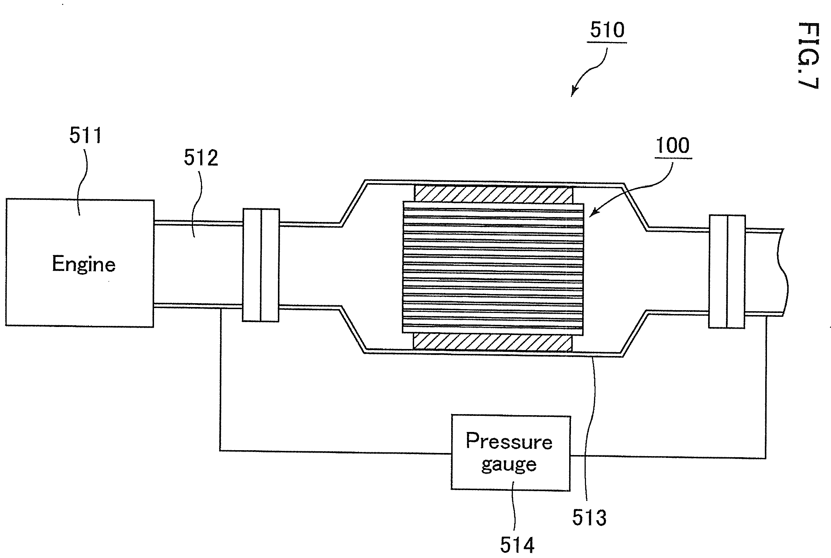

The pressure loss was measured by using a pressure loss measurement apparatus 510 as shown in Fig. 7.

Fig. 7 is a view for describing the pressure loss measurement apparatus.

In the pressure loss measurement apparatus 510, the honeycomb filter 100 was fixed to an exhaust gas pipe 512 of a 1.6 L (liter) diesel engine 511 in a metal casing 513, and a pressure gauge 514 was attached thereto so as to detect pressures in front of and in the rear of the honeycomb filter 100.

Then, the engine 511 was driven at a torque of 50Nm and a revolving speed of 3000rpm, and a differential pressure in the state where no PM is deposited on the honeycomb filter 100, that is, an initial pressure loss was measured.

Table 3 shows measurement results thus obtained.

(Measurement of collecting efficiency)

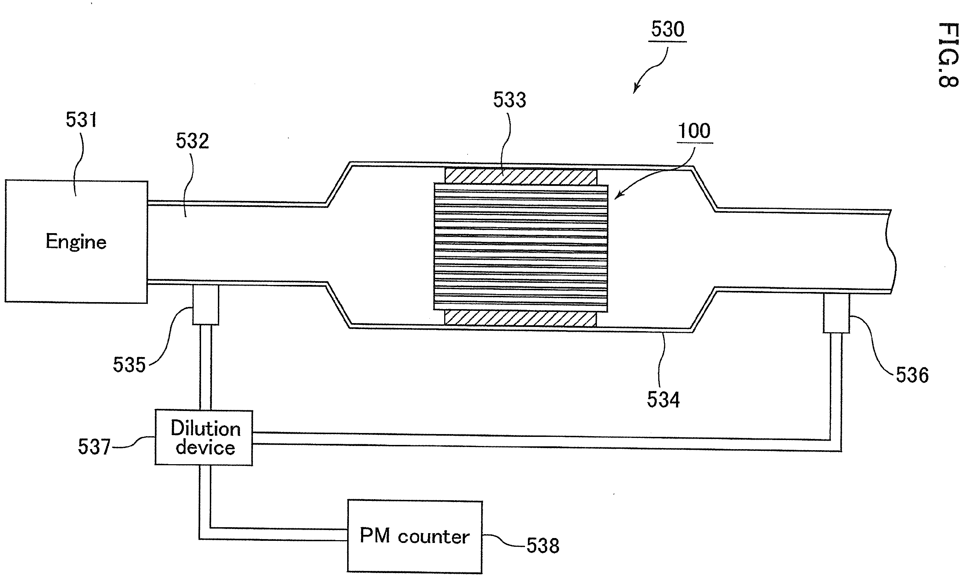

PM collecting efficiency was measured using a collecting efficiency measurement apparatus 530 as shown in Fig. 8. Fig. 8 is a view for describing the collecting efficiency measurement apparatus.

The collecting efficiency measurement apparatus 530 is a scanning mobility particle sizer (SMPS) including a 1.6 L (liter) diesel engine 531, an exhaust gas pipe 532 for passing exhaust gases from the engine 531, a metal casing 534 connected to the exhaust gas pipe 532 to fix a honeycomb filter 100 around which an alumina mat 533 is wound, a sampler 535 for sampling the exhaust gases that has not passed through the honeycomb filter 100, a sampler 536 for sampling the exhaust gases passed through the honeycomb filter 100, a dilution device 537 for diluting the exhaust gases sampled using the samplers 535 and 536, and a PM counter 538 (Agglomerated Particle Counter 3022A-S manufactured by TSI Inc.) for measuring the amount of PM contained in the diluted exhaust gases.

Next, a measurement procedure will be described. The engine 531 was driven with a torque of 50 Nm and a revolving speed of 3000 rpm, and the exhaust gases from the engine 531 was passed through the honeycomb filter 100. At this time, a PM amount $P_0$ before passage through the honeycomb filter 100 and a PM amount $P_1$ after passage through the honeycomb filter 100 were found using the PM counter 538. Then, the collecting efficiency was calculated according to a following equation.

$$\text{Collecting efficiency (\%)} = [(P_0 - P_1)/P_0] \times 100$$

The collecting efficiency was measured after PM of 0.1 g/liter of the honeycomb filter was collected.

Table 3 shows the measurement results thus obtained.

[Table 3]

|  | Initial pressure loss (kPa) | Collecting efficiency (%) |
|---|---|---|
| Example 1 | 4.3 | 98.5 |
| Example 2 | 4.2 | 98.5 |
| Example 3 | 4.25 | 98.5 |
| Example 4 | 4.2 | 98.5 |
| Comparative Example 1 | 5.0 | 98.0 |

Table 3 demonstrated that the honeycomb filters in Example 1 to Example 4 had an initial pressure loss lower than that of the honeycomb filter in Comparative Example 1.

Therefore, by forming the auxiliary filter layer including the first layer having a relatively large particle diameter and the second layer having a relatively small particle diameter, the initial pressure loss can be decreased.

Table 3 also demonstrated that in the honeycomb filters in Example 1 to Example 4, the collecting efficiency exhibited a high value of 98.5%.

On the other hand, also in the honeycomb filter in Comparative Example 1, the collecting efficiency exhibited a high value of 98.0%. However, as described above, the honeycomb filter in Comparative Example 1 is inferior to the honeycomb filters in Example 1 to Example 4 in terms of initial pressure loss.

Accordingly, the honeycomb filters in Example 1 to Example 4 can suppress an increase in the pressure loss, and maintain a high PM collecting efficiency.

In the honeycomb filter according to the embodiment of the present invention, when the auxiliary filter layer includes two or more layers, the thickness of the auxiliary filter layer is preferably from 10 to 70 μm.

As described above, the thickness of the auxiliary filter layer refers to a thickness of the entire auxiliary filter layer including the first layer and the second layer.

In the honeycomb filter according to the first embodiment of the present invention, the auxiliary filter layer is formed on only the surface of the cell wall of the cell opened at the fluid inlet end and sealed at the fluid outlet end.

However, in a honeycomb filter according to another embodiment of the present invention, the auxiliary filter layer may be also formed on the surface of the cell wall of the cell sealed at the fluid inlet end and opened at the fluid outlet end, in addition to the surface of the cell wall of the cell opened at the fluid inlet end and sealed at the fluid outlet end.

Such a honeycomb filter can be produced by immersing the ceramic honeycomb substrate in a slurry containing spherical ceramic particles manufactured in advance, and then heating the ceramic honeycomb substrate.

In the production method for the honeycomb filter according to the first embodiment of the present invention, both of the first droplet and the second droplet includes the heat-resistant oxide precursor that becomes the heat-resistant oxide by heating.

However, in the production method for the honeycomb filter according to the embodiment of the present invention, at least either the first droplets or the second droplets only need to include the heat-resistant oxide precursor as the raw material.

When the droplets include the heat-resistant oxide precursor, particles of the heat-resistant oxide can be obtained by heating the carrier gas. Then, by introducing the particles of the heat-resistant oxide into the cell, the auxiliary filter layer constituted of the particles of the heat-resistant oxide can be formed.

Alternatively, by introducing droplets including the heat-resistant oxide precursor and then heating the heat-resistant oxide precursor to obtain the heat-resistant oxide particles, the auxiliary filter layer constituted of the heat-resistant oxide particles can be formed.

In the production method for the honeycomb filter according to the embodiment of the present invention, at least either the first droplets or the second droplet may include heat-resistant oxide particles as the raw material.

When the droplets contain the heat-resistant oxide particles, moisture in the droplets may be removed by heating the carrier gas to obtain the heat-resistant oxide particles. Then, by introducing the heat-resistant oxide particles into the cell, the auxiliary filter layer constituted of the heat-resistant oxide particles can be formed.

Alternatively, by introducing droplets containing the heat-resistant oxide particles into the cell and then removing moisture in the droplets, the auxiliary filter layer constituted of the heat-resistant oxide particles can be formed.

In the honeycomb filter according to the embodiment of the present invention, the shape of the cells of the honeycomb fired bodies constituting the honeycomb filter in the cross section perpendicular to the longitudinal direction may be uniform, and the area of the cell sealed at one end face of the honeycomb fired body in the cross section perpendicular to the longitudinal direction may be equal to the area of the cell opened at the one end face of the honeycomb fired body in the cross section perpendicular to the longitudinal direction.

In the honeycomb filter according to the embodiment of the present invention, the ceramic honeycomb substrate (ceramic block) may include a single honeycomb fired body.

Such a honeycomb filter including a single honeycomb fired body is also called an integral honeycomb filter. The main constituent materials of the integral honeycomb filter may include cordierite or aluminum titanate.

In the honeycomb filter according to the embodiment of the present invention, the shape of each cell of the honeycomb fired body in the cross section perpendicular to the longitudinal direction of the honeycomb fired body is not limited to substantially quadrangular shape, and may be any shape including substantially circular shape, substantially elliptical shape, substantially pentagonal shape, substantially hexagonal shape, substantially trapezoidal shape, or substantially octagonal shape. Various shapes may coexist.

The porosity of the honeycomb fired bodies constituting the honeycomb filter according to the embodiment of the present invention is not particularly limited, but is preferably from 35 to 70%.

When the porosity of the honeycomb fired bodies is less than 35%, the honeycomb fired body is easily clogged. On the other hand, when the porosity of the honeycomb fired bodies exceeds 70%, the strength of the honeycomb fired bodies decreases so that the honeycomb fired bodies are easily broken.

The average pore diameter of the honeycomb fired bodies constituting the honeycomb filter according to the embodiment of the present invention is preferably from 5 to 30 $\mu$m.

When the average pore diameter of the honeycomb fired bodies is less than 5 $\mu$m, the honeycomb fired body is easily clogged. On the other hand, when the average pore diameter of the honeycomb fired bodies exceeds 30 $\mu$m, particulates pass through the pores of the cell walls, so that the honeycomb fired bodies cannot collect the particulates. Accordingly, the honeycomb filter cannot function as a filter.

The porosity and the pore diameter can be measured by using a conventionally known mercury porosimetry.

In the honeycomb filter of the present invention, there are following essential features: the auxiliary filter layer including at least two layers is formed on the surface of the cell wall of the ceramic honeycomb substrate, and the auxiliary filter layer includes the first layer formed by depositing particles having the first average particle diameter on the surface of the cell wall, and the second layer formed by depositing particles having the smaller second average particle diameter than the first average particle diameter, on the surface of the first layer.

Desired effects can be obtained by appropriately combining the essential features with various configuration described in the first embodiment and other embodiments in detail (for example, the structure of the auxiliary filter layer, the method of forming the auxiliary filter layer, the cell structure of the honeycomb fired body, and the production steps of the honeycomb filter).

REFERENCE SIGNS LIST

| | |
|---|---|
| 1 | Carrier gas introducing apparatus |
| 11 | Droplet |
| 12 | Spherical ceramic particle |
| 100 | Honeycomb filter |
| 103 | Ceramic honeycomb substrate (Ceramic block) |
| 110, 120, 130, 140 | Honeycomb fired body |
| 111a, 111b, 121a, 121b, 131a, 131b, 141a, 141b | Cell |
| 113 | Cell wall |
| 115 | Auxiliary filter layer |
| 115a | First layer (First layer of auxiliary filter layer) |
| 115b | Second layer (Second layer of auxiliary filter layer) |
| F | Carrier gas |

$G_1$             Exhaust gas

**Claims**

1. A production method for a honeycomb filter (100) comprising:

   a ceramic honeycomb substrate (103) including a porous honeycomb fired body (110) having a large number of cells (111a, 111b) placed longitudinally in parallel with one another with a cell wall (113) interposed therebetween, each of the cells passing fluid therethrough and being sealed at either a fluid inlet end or a fluid outlet end of the cell; and
   an auxiliary filter layer (115) including at least two layers made of a heat-resistant oxide, the auxiliary filter layer (115) being formed on a surface of the cell wall (113) of the cell opened at the fluid inlet end and sealed at the fluid outlet end, and on a pore portion in said cell wall (113), wherein
   said auxiliary filter layer (115) includes a first layer (115a) in which particles having a first average particle diameter are deposited on the surface of said cell wall (113), and a second layer (115b) in which particles having a smaller second average particle diameter than said first average particle diameter are deposited on a surface of said first layer (115a), said method comprising the following sequence of steps:

   a honeycomb fired body production step of producing a porous honeycomb fired body (110) by using a ceramic powder, the porous honeycomb fired body (110) having a large number of cells (111a, 111b) placed longitudinally in parallel with one another with a cell wall (113) interposed therebetween, each of the cells being sealed at either a fluid inlet end or a fluid outlet end of the cell; and
   an auxiliary filter layer (115) formation step of forming an auxiliary filter layer (115) including at least two layers, on a surface of said cell wall (113), wherein

   said auxiliary filter layer (115) formation step includes:

   a first droplet dispersion step of dispersing first droplets containing a raw material for first ceramic particles in first carrier gas;
   a first drying step of drying said first carrier gas at 100 to 800°C,
   a first introducing step of introducing said dried first carrier gas into the cell opened at the fluid inlet end and sealed at the fluid outlet end;
   a second droplet dispersion step of dispersing second droplets containing a raw material for second ceramic particles and having a smaller average droplet diameter than said first droplet, in second carrier gas;
   a second drying step of drying said second carrier gas at 100 to 800°C, and
   a second introducing step of introducing said dried second carrier gas into the cell opened at the fluid inlet end and sealed at the fluid outlet end, after introducing said first carrier gas,
   wherein said first droplets include a heat-resistant oxide precursor as said raw material, the heat-resistant oxide precursor becoming a heat-resistant oxide by heating, and

   in said first drying step, said first ceramic particles in a spherical shape are formed from said first droplets,
   wherein said second droplets include a heat-resistant oxide precursor as said raw material, the heat-resistant oxide precursor becoming a heat-resistant oxide by heating, and
   in said second drying step, said second ceramic particles in a spherical shape are formed from said second droplets,
   wherein in said first introducing step, said first ceramic particles are deposited on the surface of said cell wall to form said first layer (115a), and in said second introducing step, said second ceramic particles are deposited on the surface of said first layer (115a) to form said second layer (115b).

2. The production method for the honeycomb filter according to claim 1, wherein
   said first droplets are dispersed in said first carrier gas by spraying in said first droplet dispersion step,
   said second droplets are dispersed in said second carrier gas by spraying in said second droplet dispersion step, and
   a spraying pressure in said second droplet dispersion step is higher than a spraying pressure in said first droplet dispersion step.

3. The production method for the honeycomb filter according to any one of claims 1 or 2, further comprising
   at least either a first heating step of heating, to 900 to 1500°C, the ceramic honeycomb substrate (103) into which said first carrier gas is introduced or a second heating step of heating, to 900 to 1500°C, the ceramic honeycomb substrate into which said second carrier gas is introduced.

## Patentansprüche

1. Herstellungsverfahren für ein Wabenfilter (100), umfassend:

ein keramisches Wabensubstrat (103), das einen gebrannten porösen Wabenkörper (110) mit einer großen Zahl von Zellen (111a, 111b), die in Längsrichtung parallel zueinander mit einer dazwischen angeordneten Zellwand (113) platziert sind, umfasst, wobei jede der Zellen ein Fluidum durch diese hindurchführt und entweder an einem Fluidum-Einlassende oder einem Fluidum-Auslassende der Zelle verschlossen ist; und
eine zusätzliche Filterschicht (115), die mindestens zwei aus einem hitzebeständigen Oxid hergestellte Schichten umfasst, wobei die zusätzliche Filterschicht (115) auf einer Oberfläche der Zellwand (113) der an dem Fluidum-Einlassende offenen und an dem Fluidum-Auslassende geschlossenen Zelle und auf einem Porenbereich in der Zellwand (113) ausgebildet ist, wobei
die zusätzliche Filterschicht (115) eine erste Schicht (115a), in der Partikel, die einen ersten durchschnittlichen Partikeldurchmesser aufweisen, auf der Oberfläche der Zellwand (113) abgelagert sind, und eine zweite Schicht (115b), in der Partikel, die einen zweiten durchschnittlichen Partikeldurchmesser, der kleiner als der erste durchschnittliche Partikeldurchmesser ist, aufweisen, auf einer Oberfläche der ersten Schicht (115a) abgelagert sind, umfasst, wobei das Verfahren die folgende Abfolge von Stufen umfasst:

eine Herstellungsstufe eines gebrannten Wabenkörpers, die die Herstellung eines gebrannten porösen Wabenkörpers (110) unter Verwendung eines keramischen Pulvers umfasst, wobei der gebrannte poröse Wabenkörper (110) eine große Zahl von Zellen (111a, 111b), die in Längsrichtung parallel zueinander mit einer dazwischen angeordneten Zellwand (113) platziert sind, aufweist, wobei jede der Zellen entweder an einem Fluidum-Einlassende oder an einem Fluidum-Auslassende der Zelle verschlossen ist; und
eine Bildungsstufe einer zusätzlichen Filterschicht (115), die ein Ausbilden einer zusätzlichen Filterschicht (115), die mindestens zwei Schichten umfasst, auf einer Oberfläche der Zellwand (113) umfasst, wobei

die Bildungsstufe einer zusätzlichen Filterschicht (115) Folgendes umfasst:

eine erste Tröpfchen-Dispersionsstufe, die ein Dispergieren von ersten Tröpfchen, die ein Rohmaterial für erste keramische Partikel enthalten, in einem ersten Trägergas umfasst; °C,
eine erste Trocknungsstufe eines Trocknens des ersten Trägergases bei 100 bis 800 °C.
eine erste Einführungsstufe eines Einführens des getrockneten ersten Trägergases in die an dem Fluidum-Einlassende offene und an dem Fluidum-Auslassende geschlossene Zelle,
eine zweite Tröpfchen-Dispersionsstufe, die ein Dispergieren von zweiten Tröpfchen, die ein Rohmaterial für zweite keramische Partikel enthalten und einen kleineren durchschnittlichen Tröpfchendurchmesser als die ersten Tröpfchen aufweisen, in einem zweiten Trägergas umfasst;
eine zweite Trocknungsstufe eines Trocknens eines zweiten Trägergases bei 100 bis 800 °C und
eine zweite Einführungsstufe eines Einführens des getrockneten zweiten Trägergases in die an dem Fluidum-Einlassende offene und an dem Fluidum-Auslassende verschlossene Zelle nach dem Einführen des ersten Trägergases,

wobei die ersten Tröpfchen einen Vorläufer eines hitzebeständigen Oxids als das Rohmaterial umfassen, wobei aus dem Vorläufer eines hitzebeständigen Oxids durch Erhitzen ein hitzebeständiges Oxid wird, und
in der ersten Trocknungsstufe die ersten keramischen Partikel in einer kugelförmigen Form aus den ersten Tröpfchen gebildet werden, wobei die zweiten Tröpfchen einen Vorläufer eines hitzebeständigen Oxids als das Rohmaterial umfassen, wobei aus dem Vorläufer eines hitzebeständigen Oxids durch Erhitzen ein hitzebeständiges Oxid wird, und
in der zweiten Trocknungsstufe die zweiten keramischen Partikel in einer kugelförmigen Form aus den zweiten Tröpfchen gebildet werden,
wobei in der ersten Einführungsstufe die ersten keramischen Partikel auf der Oberfläche der Zellwand zur Bildung der ersten Schicht (115a) abgelagert werden und in der zweiten Einführungsstufe die zweiten keramischen Partikel auf der Oberfläche der ersten Schicht (115a) zur Bildung der zweiten Schicht (115b) abgelagert werden.

**2.** Herstellungsverfahren für das Wabenfilter nach Anspruch 1, wobei
die ersten Tröpfchen in dem ersten Trägergas durch Versprühen in der ersten Tröpfchen-Dispersionsstufe dispergiert werden,
die zweiten Tröpfchen in dem zweiten Trägergas durch Versprühen in der zweiten Tröpfchen-Dispersionsstufe dispergiert werden und
ein Sprühdruck in der zweiten Tröpfchen-Dispersionsstufe höher ist als ein Sprühdruck in der ersten Tröpfchen-Dispersionsstufe.

**3.** Herstellungsverfahren für das Wabenfilter nach einem der Ansprüche 1 oder 2, das ferner Folgendes umfasst:
mindestens entweder eine erste Erwärmungsstufe eines Erwärmens auf 900 bis 1.500 °C des keramischen Wabensubstrats (103), in welches das erste Trägergas eingeführt wird, oder eine zweite Erwärmungsstufe eines Erwärmens auf 900 bis 1.500 °C des keramischen Wabensubstrats, in welches das zweite Trägergas eingeführt wird.

**Revendications**

**1.** Procédé de production pour un filtre en nid d'abeilles (100) comprenant :

un substrat en nid d'abeilles en céramique (103) comprenant un corps cuit en nid d'abeilles poreux (110) ayant un grand nombre de cellules (111a, 111b) placées longitudinalement en parallèle les unes avec les autres avec une paroi cellulaire (113) interposée entre elles, chacune des cellules faisant passer du fluide à travers celles-ci et étant scellée à une extrémité d'entrée de fluide ou à une extrémité de sortie de fluide de la cellule; et
une couche de filtre auxiliaire (115) comprenant au moins deux couches constituées d'un oxyde résistant à la chaleur, la couche de filtre auxiliaire (115) étant formée sur une surface de la paroi cellulaire (113) de la cellule ouverte à l'extrémité de l'entrée de fluide et scellée à l'extrémité de la sortie de fluide et sur une partie de pore dans ladite paroi cellulaire (113), où
ladite couche de filtre auxiliaire (115) comprend une première couche (115a) dans laquelle des particules ayant un premier diamètre de particule moyen sont déposées sur la surface de ladite paroi cellulaire (113), et une seconde couche (115b) dans laquelle des particules ayant un second diamètre de particule moyen plus petit que ledit premier diamètre de particule moyen sont déposées sur une surface de ladite première couche (115a), ledit procédé comprenant la séquence d'étapes suivantes :

une étape de production d'un corps cuit en nid d'abeilles de production d'un corps cuit en nid d'abeilles poreux (110) en utilisant une poudre de céramique, le corps cuit en nid d'abeilles poreux (110) ayant un grand nombre de cellules (111a, 111b) placées longitudinalement en parallèle les unes avec les autres avec une paroi cellulaire (113) interposée entre elles, chacune des cellules étant scellée à une extrémité d'entrée de fluide ou une extrémité de sortie de fluide de la cellule ; et
une étape de formation d'une couche de filtre auxiliaire (115) de formation d'une couche de filtre auxiliaire (115) comprenant au moins deux couches, sur une surface de ladite paroi cellulaire (113), où

ladite étape de formation de couche de filtre auxiliaire (115) comprend :

une première étape de dispersion de gouttelettes de dispersion de premières gouttelettes contenant une matière brute pour les premières particules de céramique dans un premier gaz de transport ;
une première étape de séchage de séchage dudit premier gaz de transport à 100 à 800 °C,
une première étape d'introduction d'introduction dudit premier gaz de transport séché dans la cellule ouverte à l'extrémité d'entrée de fluide et scellée à l'extrémité de sortie de fluide ;
une seconde étape de dispersion de gouttelettes de dispersion de secondes gouttelettes contenant une matière brute pour les secondes particules de céramique et ayant un diamètre de gouttelette moyen plus petit que ladite première gouttelette, dans un second gaz de transport ;
une seconde étape de séchage de séchage dudit second gaz de transport à 100 à 800 °C, et
une seconde étape d'introduction d'introduction dudit second gaz de transport séché dans la cellule ouverte à l'extrémité d'entrée de fluide et scellée à l'extrémité de sortie de fluide, après l'introduction dudit premier gaz de transport,

où lesdites premières gouttelettes comprennent un précurseur d'oxyde résistant à la chaleur comme ladite matière brute, ledit précurseur d'oxyde résistant à la chaleur devenant un oxyde résistant à la chaleur par chauffage, et

dans ladite première étape de séchage, lesdites premières particules de céramique en forme sphérique sont formées à partir desdites premières gouttelettes, où lesdites secondes gouttelettes comprennent un précurseur d'oxyde résistant à la chaleur comme ladite matière brute, le précurseur d'oxyde résistant à la chaleur devenant un oxyde résistant à la chaleur par chauffage, et

dans ladite seconde étape de séchage, lesdites secondes particules en céramique en une forme sphérique sont formées à partir desdites secondes gouttelettes,

où dans ladite première étape d'introduction, lesdites premières particules de céramique sont déposées sur la surface de ladite paroi cellulaire pour former ladite première couche (115a), et dans ladite seconde étape d'introduction, lesdites secondes particules de céramique sont déposées sur la surface de ladite première couche (115a) pour former ladite seconde couche (115b).

2. Procédé de production pour le filtre en nid d'abeilles selon la revendication 1, dans lequel
lesdites premières gouttelette sont dispersées dans ledit premier gaz de transport par pulvérisation dans ladite première étape de dispersion de gouttelettes,
lesdites secondes gouttelettes sont dispersées dans ledit second gaz de transport par pulvérisation dans ladite seconde étape de dispersion de gouttelettes, et
une pression de pulvérisation dans ladite seconde étape de dispersion de gouttelettes est supérieure à une pression de pulvérisation dans ladite première étape de dispersion de gouttelettes.

3. Procédé de production pour le filtre en nid d'abeilles selon l'une quelconque des revendications 1 ou 2, comprenant en outre
au moins une première étape de chauffage de chauffage, à 900 à 1500 °C, du substrat en nid d'abeilles en céramique (103) dans lequel ledit premier gaz de transport est introduit ou une seconde étape de chauffage de chauffage, à 900 à 1500 °C, du substrat en nid d'abeilles en céramique dans lequel ledit second gaz de transport est introduit.

# FIG.1

## FIG.2

(a)

(b)

A-A line cross-sectional view

FIG.3

# FIG.4

(a)

(b)

FIG.5

(a)

(b)

(c)

# FIG.6

FIG.7

FIG.8

**EP 2 832 414 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1302231 A1
- EP 0470340 A1
- JP 2009085010 A
- WO 2012030533 A1
- WO 2008136232 A